# EUROPÄISCHE PATENTSCHRIFT

(11) **EP 1 192 552 B1**
(45) Veröffentlichungstag und Bekanntmachung des Hinweises auf die Patenterteilung: **28.10.2009**
(21) Anmeldenummer: 00949108.5
(22) Anmeldetag: 15.06.2000
(51) Int. Cl.: G06F 13/40

(54) **VORRICHTUNG ZUR ERWEITERUNG EINES BUSSTECKPLATZES UND SYSTEM MIT DIESER VORRICHTUNG**
DEVICE FOR EXTENDING A BUS RECEPTACLE AND SYSTEM WITH THIS DEVICE
DISPOSITIF D'EXTENSION D'UN CONNECTEUR DE BUS ET SYSTEME POURVU DE CE DISPOSITIF

(30) Priorität: 01.07.1999 DE 19930421
(43) Veröffentlichungstag der Anmeldung: 03.04.2002
(73) Patentinhaber: Fujitsu Siemens Computers GmbH, 80807 München (DE)
(72) Erfinder: MÖHRING, Hermann, D-86343 Königsbrunn (DE)
(74) Vertreter: Epping - Hermann - Fischer
(86) Internationale Anmeldenummer: PCT/DE2000/001967
(87) Internationale Veröffentlichungsnummer: WO 2001/002967

(56) Entgegenhaltungen:
- US-A- 5 434 996
- US-A- 5 604 871
- US-A- 5 765 008
- SHANLEY & ANDERSON: "PCI System Architecture Third Edition" November 1995 (1995-11) , MINDSHARE INC. , MENLO PARK, CA XP002152344 29796 Seite 77, Absatz 1 -Seite 80, Absatz 2 Seite 441, Absatz 2 - Absatz 7

## Beschreibung

Die vorliegende Erfindung betrifft eine Vorrichtung zur Erweiterung eines Bussteckplatzes an einem Bus mit Steuerleitungen, Datenleitungen, Adressleitungen und Versorgungsleitungen auf einem Systemboard, insbesondere einem Motherboard eines Computers, wobei die Vorrichtung eine Erweiterungsplatte hat, die in den Bussteckplatz des Systemboards einsteckbar ist und die Erweiterungsplatte einen Erweiterungsbus aufweist, dessen Steuerleitungen, Datenleitungen und Adressleitungen den Leitungen des Busses auf dem Systemboard entsprechen, und die Erweiterungsplatte des weiteren mehrere zusätzliche Bussteckplätze sowie eine Steuereinrichtung aufweist, wobei die zusätzlichen Bussteckplätze mit Daten- und Adressleitungen des Erweiterungsbusses verbunden sind und die Steuereinrichtung mit Steuerleitungen des Erweiterungsbusses und über Leitungen mit Steckplatzanschlüssen der zusätzlichen Bussteckplätze verbunden ist und Steuersignale über Steuerleitungen des Erweiterungsbusses sendet oder empfängt, und ein System mit einem Systemboard, aufweisend einen Bus und mehrere an dem Bus angeordnete Steckplätze für Erweiterungskarten.

In Personalcomputern und ähnlichen Computersystemen wird in der Regel ein Systemboard beziehungsweise Motherboard verwendet, auf dem der Mikroprozessor samt Arbeitsspeicher, ROM und peripheren Einheiten und weitere wichtige Computerkomponenten untergebracht ist. Der Mikroprozessor ist im allgemeinen mit den peripheren Einheiten auf dem Systemboard, also beispielsweise mit den Ein/Ausgabe-Controllern usw. mit einem bidirektionalen Bus verbunden, der über Daten, Adress-, Steuer-, und Versorgungsleitungen verfügt.

Als Bussystem wird beispielsweise weit verbreitet der PCI (Peripheral Component Interconnect) Bus verwendet. An dem Bus sind im allgemeinen mehrere, parallel zueinander sich erstreckende Bussteckplätze des Systemboards vorgesehen, in die Erweiterungskarten zur funktionellen Erweiterung des Computersystems eingesteckt werden können. Die Anzahl dieser Erweiterungskarten und der zugehörigen Funktionen steigt zunehmend an, mit der Folge, daß in vielen Computersystemen zu wenige Bussteckplätze für die beabsichtigte Realisierung von Zusatzfunktionen über Erweiterungskarten vorhanden sind. Insbesondere in Computergehäusen mit relativ geringem Volumen, sogenannten Low-Profil-Gehäusen, Desktop-Gehäusen und ähnlichen Gehäusen, die ein entsprechend platzsparendes Systemboard benötigen, ist die Anzahl der Bussteckplätze für Erweiterungszwecke aus Platzgründen eingeschränkt. Um mehr Bussteckplätze bereitstellen zu können, hat man deshalb spezielle Erweiterungskarten, sogenannte Riser-Karten entwickelt, die einen Steckplatz auf dem Systemboard einnehmen und wiederum selber mehrere zusätzliche Bussteckplätze pro Karte anbieten. Um die Funktion dieser zusätzlichen Bussteckplätze sicherzustellen, sind jedoch speziell modifizierte und dementsprechend aufwendige Systemboards erforderlich, wie beispielsweise das Mikro-ATX-Motherboard oder LPX/NLX-Formate.

Aufgabe der vorliegenden Erfindung ist es, eine Erweiterungskarte (Riser-Karte) mit mehreren zusätzlichen Bussteckplätzen anzugeben, an denen funktionelle Erweiterungskarten auch auf unmodifizierten Standard-Systemboards betrieben werden können.

Diese Aufgabe wird mittels einer Vorrichtung der eingangs genannten Art, wie z.B. Offenbart in US-A-5 604 871, dadurch gelöst, dass der Erweiterungsbus Leitungen zur Versorgung aller Komponenten auf der Erweiterungsplatte aufweist, die den Versorgungsleitungen des Busses auf dem Systemboard entsprechen, und die Steuereinrichtung zusätzlich ein Taktsignal von einer Steuerleitung des Erweiterungsbusses empfängt, das dem Taktsignal des Busses auf dem Systemboard entspricht, und jedem zusätzlichen Bussteckplatz auf der Erweiterungsplatte derart aufbereitete Steuer- und Taktsignale zuweist, dass jedem zusätzlichen Bussteckplatz ein konfliktfreier Zugriff auf den Bus des Sytemboards über den Bussteckplatz auf dem Systemboard ermöglicht wird.

Die Erfindung hat den erheblichen Vorteil, dass die erfindungsgemäße Versorgung aller Komponenten auf der Erweiterungsplatte, sowie die Steuereinrichtung auf der Riser-Karte eine extra Modifizierung des Motherboards beziehungsweise Systemboards und/oder diverser funktioneller Erweiterungskarten zum Einstecken in die Schlitze beziehungsweise Slots der Riser-Karte erübrigt. Zudem verhindert die erfindungsgemäße Steuereinrichtung einen Zugriffskonflikt und/oder eine Datenkollision zwischen den einzelnen zusätzlichen Bussteckplätzen, indem sie den Zugriff eines jeden zusätzlichen Bussteckplatzes selektiv steuert. Damit sind die Riser-Karten nach der Erfindung universell auf allen Systemboards einsetzbar, wodurch eine unproblematische und einfach zu handhabende Erweiterungsmöglichkeit für eine Vielzahl von bereits bestehenden Computersystemen mit Standartboards ermöglicht wird.

Vorzugsweise hat die Steuereinrichtung eine Takterzeugungsschaltung, die über einen Eingangsanschluss der Steuereinrichtung ein Taktsignal erhält, das dem Taktsignal des Busses auf dem Systemboard entspricht, und die aus dem Taktsignal mehrere zusätzliche Taktsignale erzeugt, die zueinander phasengleich sind und jeweils einem zugeordneten Steckplatzanschluss eines der zusätzlichen Bussteckplätze zugeführt werden. Damit können sämtliche zusätzliche Bussteckplätze beziehungsweise Slots der Riser-Karte mit in der Phase identischen Taktsignalen versorgt werden, wodurch ein zuverlässiger Betrieb von eingesteckten Funktionseinheiten an der Riser-Karte sichergestellt ist.

Die von der Takterzeugungsschaltung erzeugten Taktsignale sind vorzugsweise phasengleich zu dem der Takterzeugungsschaltung zugeführten Taktsignal. Hierdurch kann die Synchronisation der erzeugten Taktsignale mit dem Bustakt auf dem Systemboard weiter verbessert werden.

Vorzugsweise ist die Takterzeugungsschaltung als Pufferschaltung ohne Verzögerung (Zero Delay Buffer) ausgelegt, um die erforderliche Pufferung des Takts zu erreichen.

Die Pufferschaltung weist bevorzugt eine Phase-Locked-Loop-Schaltung auf, der eingangsseitig das Taktsignal vom Bus auf dem Systemboard und ein Rückkoppelsignal zugeführt wird, das einem der ausgangsseitig bereitgestellten Taktsignale entspricht, wobei die Phase-Locked-Loop-Schaltung das ausgangsseitige Taktsignal derart erzeugt, dass die Phasendifferenz zwischen eingangsseitig zugeführtem Taktsignal und Rückkoppelsignal Null wird. Mit der PLL-Schaltung wird eine besonders genau arbeitende Phasensynchronisation erreicht.

Die Steuereinrichtung ist bevorzugt mit Steuerleitungen zum Übertragen von Arbitrierungssignalen zwischen der Steuereinrichtung und dem Erweiterungsbus verbunden und auch mit Leitungen zum Übertragen von Arbitrierungssignalen zwischen der Steuereinrichtung und zugeordneten Anschlüssen der zusätzlichen Bussteckplätze verbunden. Durch diese Auslegung wird die Zugriffsberechtigung einzelner Funktionseinheiten an den zusätzlichen Bussteckplätzen der Erweiterungsplatte beziehungsweise Riser-Karte zuverlässig gesteuert, ohne daß Modifikationen auf dem Sytemboard erforderlich wären.

Zwischen der Steuereinrichtung und dem Erweiterungsbus wird bevorzugt ein Paar von Arbritierungssignalen über ein Paar von zugeordneten Leitungen ausgetauscht, wobei zwischen der Steuereinrichtung und jedem der zusätzlichen Bussteckplätze je ein Paar von Arbitrierungssignalen auf einem jeweils zugeordneten Paar von Leitungen ausgetauscht wird. Durch diese Konfiguration kann die beim PCI-Bus bewährte Arbitrierungssignalisierung auch bei der Unterarbitrierung auf der Riser-Karte angewandt werden.

Demnach werden also bevorzugt als Paar von Arbitrierungssignalen zwischen dem Arbiter der Erweiterungsplatte und dem Systemboard ein Grant-Signal zur Gewährung des Zugriffs auf den Bus des Sytemboards und ein Request-Signal zur Nachfrage nach der Gewährung des Zugriffs auf den Bus des Sytemboards vom Arbiter aus verwendet.

Weiterhin kann jedes Paar von Arbitrierungssignalen zwischen dem Arbiter und dem jeweils einen, zugeordneten zusätzlichen Bussteckplatz auf der Erweiterungsplatte ein Grant-Signal zur Gewährung des Zugriffs auf den Bus des Sytemboards vom Arbiter der Erweiterungsplatte und ein Request-Signal zur Nachfrage nach der Gewährung des Zugriffs auf den Bus des Systemboards von dem jeweiligen zusätzlichen Bussteckplatz der Erweiterungsplatte aus umfassen.

Die oben genannte Aufgabe wird ferner mittels eines Systems der eingangs genannten Art dadurch gelöst, dass mindestens eine Vorrichtung gemäß einer der oben genannten Ausführungsbeispiele, aufweisend mehrere zusätzliche Bussteckplätze zur Aufnahme jeweils einer Erweiterungskarte, in einen Bussteckplatz des Systemboards eingesteckt ist.

Vorteilhafte Weiterbildungen sind den restlichen Unteransprüchen zu entnehmen.
Ausführungsbeispiele der Erfindung werden nun anhand der beiliegenden Zeichnungen beschrieben. Es zeigen:
Figur 1 schematisch als Blockdiagramm, eine erste Ausführungsform der erfindungsgemäßen Vorrichtung mit Verbindung zu einem Bussteckplatz auf dem Systemboard;
Figur 2 ein Blockschaltbild des Aufbaus einer Detailschaltung aus Figur 1, nämlich eines Puffers mit Nullverzögerung (Zero Delay Buffer); und
Figur 3 eine perspektivische, herausgelöste Detailansicht einer in ein Systemboard eingesteckten erfindungsgemäßen Erweiterungsplatte, wobei ein zusätzlicher Bussteckplatz der Erweiterungsplatte mit einer Vorrichtung als Funktionseinheit belegt ist.

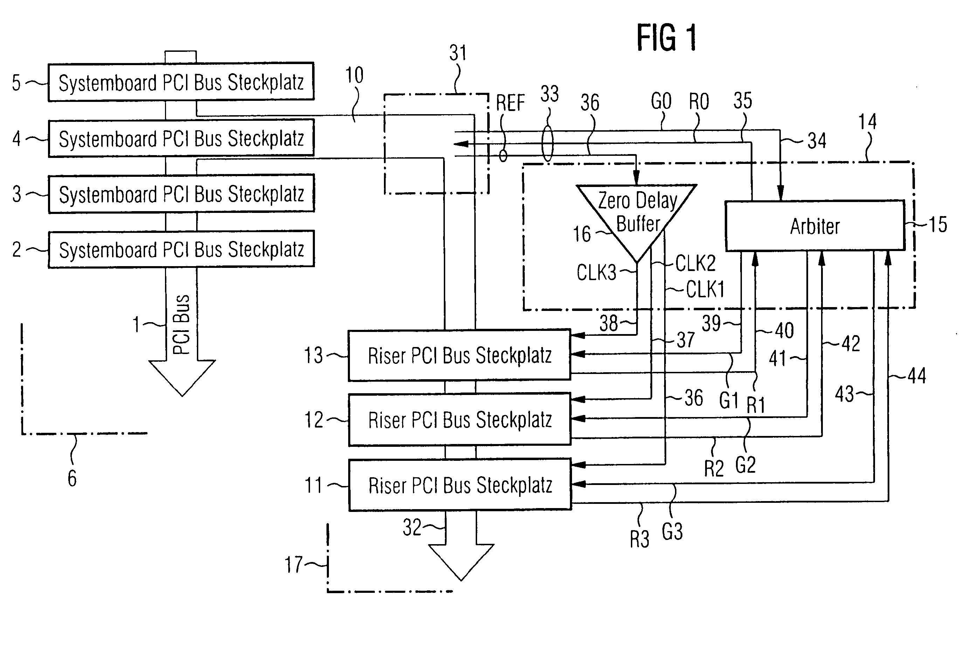

In der Figur 1 ist schematisch anhand eines Blockschaltbildes der Aufbau einer Ausführungsform der erfindungsgemäßen Vorrichtung und des erfindungsgemäßen Systems gezeigt, das ein Systemboard 6 beziehungsweise Motherboard (gestrichelt in Figur 1 angedeutet) und eine Erweiterungsplatte 17 beziehungsweise Riser-Karte gemäß der Vorrichtung der Erfindung aufweist.

Das Systemboard 6 umfaßt die wesentlichen Einheiten eines Computers oder PCs, nämlich die Prozessoreinheit oder mehrere Prozessoren, den Arbeitsspeicher und Eingabe/Ausgabe-Controller und Einheiten zur Ansteuerung und Steuerung der peripheren Einheiten des PCs und dergleichen.

In der Figur 1 ist das Systemboard 6, beispielsweise ein Standard ATX-Board, lediglich mit seinem Bus 1, beispielsweise einem PCI-Bus, gezeigt, an dem sich mehrere Steckplätze 2, 3, 4 und 5 erstrecken, die jeweils als Stecker zur Aufnahme einer Erweiterungskarte mit zusätzlicher Funktion, beispielsweise einer Scannerkarte, einer Audiokarte, einer Fernsehkarte, einer Faxkarte oder ähnlichem ausgelegt sind. Die zueinander identischen Bussteckplätze 2 bis 5 am Bus 1 des Systemboards 6 sind mit ihren Anschlußkontakten mit entsprechenden Anschlüssen des Busses 1 beziehungsweise des Systembusses des Systemboards 6 verbunden.

In der Figur 1 ist weiterhin eine Erweiterungsplatte 17 (gestrichelt angedeutet) gezeigt, die drei zusätzliche Bussteckplätze 11, 12 und 13 (beispielsweise Riser-PCI-BusSteckplätze) aufweist, die auch mit anschlußkontaktierten Steckverbindern ausgelegt sind, und in den Steckplatz 4 (Systemboard-PCI-Bus-Steckplatz) auf dem Systemboard 6 eingesteckt ist.

Die Erweiterungsplatte 17 gemäß der hier gezeigten Ausführungsform der Vorrichtung der Erfindung, die auch als Riser-Erweiterungskarte oder Steckkarte bezeichnet wird, umfaßt weiterhin einen Erweiterungsbus 10, der zunächst zum Bus 1 des Systemboards, beispielsweise dem PCI-Bus, eine identische Anzahl und Funktion der Busleitungen, nämlich der Adressleitungen, Datenleitungen, Steuerleitungen und Versorgungsleitungen hat, sich aber dann auf der Erweiterungsplatte 17 an einer Abzweigung 31 in einen reduzierten Riser-Bus 32 mit einer gegenüber dem Bus 1 des Systemboards 6 reduzierten Anzahl von Funktionen und Leitungen und einen Abzweigbus 33 aufteilt, dessen Leitungen in Funktion und Anzahl den Leitungen entsprechen, um die sich der reduzierte Riser-Bus 32 gegenüber dem Bus 1 auf dem Systemboard unterscheidet beziehungsweise reduziert worden ist. Der reduzierte Riser-Bus 32 erstreckt sich von der Abzweigung 31 aus direkt zu den zusätzlichen Bussteckplätzen 11, 12, 13. Die Leitungen des Abzweigbusses 33 umfassen die Steuerleitungen 34, 35 und 36, die an der Abzweigung 31 abgezweigt sind. Der Abzweigbus erstreckt sich zwischen der Abzweigung 31 und einer Steuereinrichtung 14.

Auf der Erweiterungsplatte 17 ist weiterhin die Steuereinrichtung 14 ausgebildet, die eine Pufferschaltung 16 und einen Arbiter 15 aufweist. Die Pufferschaltung 16 dient zur Pufferung eines Taktsignals REF auf der Leitung 36 des Abzweigbusses 33, wobei das Taktsignal dem Taktsignal des Busses 1 auf dem Systemboard 6 auf einer entsprechenden Steuerleitung beziehungsweise Taktsignalleitung des Busses 1 entspricht. Dieses Taktsignal REF wird der Pufferschaltung 16 als Referenzsignal auf der Leitung 36 zugeführt. Aus dem Referenz-Taktsignal REF erzeugt die Pufferschaltung 16 eine Anzahl von ausgangsseitigen Taktsignalen CLK1, CLK2, CLK3, die in der Anzahl den zusätzlichen Bussteckplätzen 11, 12, 13 auf der Erweiterungsplatte 17 entsprechen. In der Ausführungsform der Figur 1 sind die Taktsignale CLK1, CLK2 und CLK3 gezeigt, die auf entsprechenden Leitungen 36, 37, 38 den zugeordneten zusätzlichen Bussteckplätzen 11, 12 und 13 zugeführt werden. Genauer wird das Taktsignal CLK1 am Ausgang der Pufferschaltung 16 über die Leitung 36 dem zusätzlichen Bussteckplatz 11 der Erweiterungsplatte 17 zugeführt. Das Taktsignal CLK 2 wird über die Leitung 37 dem zusätzlichen Bussteckplatz 12 zugeführt. Und das Taktsignal CLK 3 wird über die Leitung 38 dem Bussteckplatz 13 zugeführt. Die Pufferschaltung 16 stellt die Pufferung des Taktsignals vom Bus 1 des Systemboards bereit, um den Takt beziehungsweise den Systemtakt auf der Erweiterungsplatte 17 an die Verzögerungen und Laufzeiten der sonstigen Bussignale anzupassen, damit der Betrieb von Erweiterungskarten als Funktionseinheiten an den zusätzlichen Bussteckplätzen 11, 12, 13 auf der Riser-Card sichergestellt werden kann.

Die Pufferschaltung 16 ist als Puffer mit zueinander phasengleichen, ausgangsseitigen Taktsignalen CLK1, CLK2, CLK3 ausgelegt, wobei die ausgangsseitigen Taktsignale genau phasengleich zu dem Referenz-Taktsignal REF am Eingang der Pufferschaltung 16 sind, um die Synchronisation der Taktsignale CLK1, CLK2 und CLK3 mit dem Referenztaktsignal REF beziehungsweise dem Bus-Taktsignal des Busses 1 sicherzustellen.

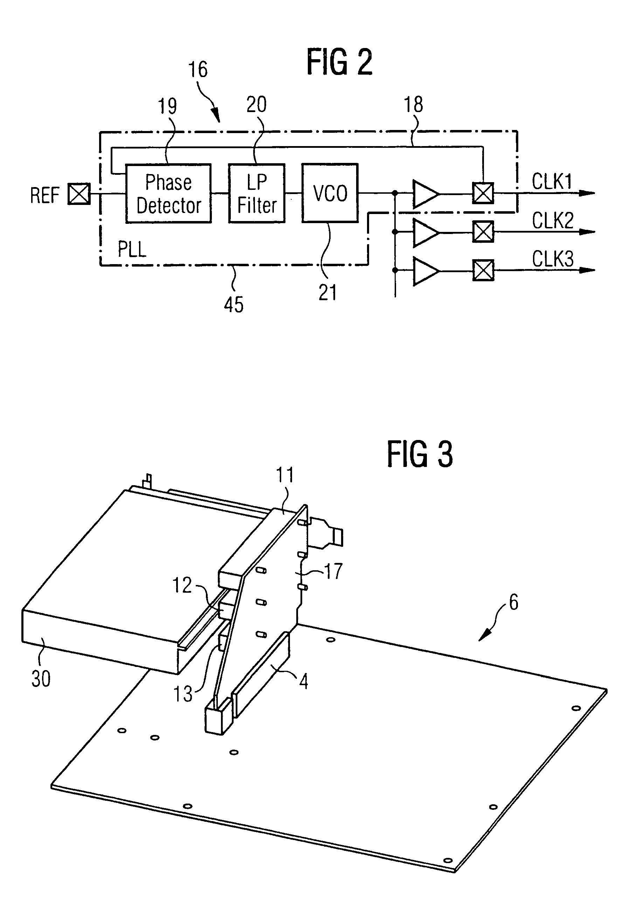

Die Pufferschaltung 16 kann als sogenannter Puffer mit Nullverzögerung (Zero Delay Buffer) ausgelegt sein, wie in der Figur 2 gezeigt ist. Die Pufferschaltung 16 umfaßt eine Phase-Locked-Loop-Schaltung 45, die einen Phasendetektor 19, einen dem Phasendetektor 19 nachgeschalteten Tiefpaßfilter 20 und einen dem Tiefpaßfilter 20 nachgeschalteten spannungsgesteuerten Oszillator (VCO) 21 und einer Rückkoppelleitung 18 aufweist, die das Ausgangssignal des Phase-Locked-Loop, beispielsweise das Taktsignal CLK1, an den Eingang des Phasendetektors 19 rückkoppelt beziehungsweise zurückführt.

Am Eingang des Phasendetektors 19 wird weiterhin das Referenz-Taktsignal REF zugeführt. Die Phase-Locked-Loop-Schaltung 45 arbeitet nun so, daß ein Phasenunterschied des rückgekoppelten Taktsignals CLK1 und des Referenztaktsignal REF an seinem Eingang verschwindet, also zu Null wird. Ist die Phasendifferenz der Signale am Eingang des Phasendetektors 19 Null, bedeutet dies, daß das Taktsignal CLK1 und damit auch die Taktsignale CLK2 und auch CLK3 phasengleich beziehungsweise phasensynchron zum Referenz-Taktsignal REF sind und folglich auch zueinander phasengleich sind.

Die Steuereinrichtung 14 auf der Erweiterungsplatte 17 umfaßt weiterhin den Arbiter 15, der die Zugangs- beziehungsweise Zugriffsberechtigung von Erweiterungkarten, die in den zusätzlichen Bussteckplätzen auf der Erweiterungsplatte 17 eingesteckt sind, auf den Bus 32 und damit auf den Bus 1 des Systemboards 6 steuert. Der Arbiter 15 ist eingangsseitig mit den Steuerleitungen 34 und 35 des Abzweigbusses 33 verbunden. Auf der Leitung 34 wird dem Arbiter 15 ein Grant-Signal (Gewährungssignal) G0 vom Bus 10 beziehungsweise dem Bus 1 aus zugeführt, während auf der Leitung 35 ein Requestsignal beziehungsweise Nachfrage- oder Aufforderungssignal R0 vom Arbiter 15 aus dem Bus 10 und damit dem Bus 1 des Systemboards 6 zugeführt wird.

Am Ausgang ist der Arbiter 15 über entsprechende Leitungen 39 bis 44 mit den zusätzlichen Bussteckplätzen 11 bis 13 der Erweiterungsplatte 17 verbunden. Auf der Leitung 39 überträgt der Arbiter 15 ein Grant-Signal G1 zum zusätzlichen Bussteckplatz 13 auf der Erweiterungsplatte 17, während auf der Leitung 40 das zugehörige Request-Signal R1 in umgekehrte Richtung vom zusätzlichen Bussteckplatz 13 zum Arbiter 15 gesendet wird. Ein weiteres Signalpaar, nämlich die Signale G2 und R2, wird auf den Leitungen 41 und 42 übertragen. Genauer gibt der Arbiter 15 ein Grant-Signal G2 auf die Leitung 41 aus, das dann dem zusätzlichen Bussteckplatz 12 zugeführt wird. Das zugehörige Requestsignal R2 wird auf der Leitung 42 vom zusätzlichen Bussteckplatz 12 zum Arbiter 15 übertragen. Zudem wird ein Signalpaar G3 und R3 auf den Leitungen 43 und 44 zwischen dem Arbiter 15 und dem zusätzlichen Bussteckplatz 11 übertragen. Genauer gibt der Arbiter 15 ein Grantsignal G3 auf die Leitung 43 aus, das dem zusätzlichen Bussteckplatz 11 zugeführt wird, während das zugehörige Requestsignal R3 vom zusätzlichen Bussteckplatz 11 dem Arbiter 15 auf der Leitung 44 zugeführt wird.

Der Arbiter 15, führt eine sogenannte Unterarbitrierung mit den im Wesentlichen folgenden Schritten aus. Ist beispielsweise in dem zusätzlichen Bussteckplatz 13 eine Erweiterungskarte eingesteckt und wird durch die Funktionseinheit dieser Erweiterungskarte der Zugriff auf den Bus 1 des Systemboards beansprucht, gibt die Funktionseinheit (nicht gezeigt) auf der Erweiterungskarte des zusätzlichen Bussteckplatzes 13 das Requestsignal R1 aus, das über die Leitung 40 zum Arbiter 15 der Steuereinrichtung 14 übertragen wird.

Der Arbiter 15 erzeugt dann auf den Empfang des Requestsignals R1 von der Funktionseinheit des Bussteckplatzes 13 hin das Requestsignal R0, das wiederum über die Leitung 35 des Abzweigbusses 33 dem Bus 10 auf der Erweiterungsplatte 17 und damit dem Bus 1 auf dem Systemboard 6 zugeführt wird. Der Arbiter 15 arbeitet damit als Master, der einen Zugriff auf den Systembus 1 des Systemboards 6 über die Ausgabe des Requestsignals R0 beansprucht. Gewährt nun die Arbitrierung des Systemboards 6 den Buszugriff, sendet sie über den Bus 1, die entsprechende Leitung des Busses 10 und über die Abzweigung 31 und die zugeordnete Leitung 34 das Grantsignal G0 an den Arbiter 15 zurück. Der Arbiter 15 gibt nach Empfang des Grantsignals G0 das Grantsignal G1 über die Leitung 39 zu dem zusätzlichen Bussteckplatz 13 und damit zu der Funktionseinheit an dem zusätzlichen Bussteckplatz 13 aus. Die Funktionseinheit am Bussteckplatz 13 kann nunmehr nach Empfang des Grant-Signals G1 auf den Bus 32, den Bus 10 und damit auf den Bus 1 des Systemboards zugreifen, um Daten-, Adress- und Steuersignale über die Busse zu übertragen.

Ist beispielsweise im zusätzlichen Bussteckplatz 12 der Erweiterungsplatte 17 eine Funktionseinheit eingesteckt und beansprucht diese Funktionseinheit den Zugriff auf den Bus 1 werden hier in analoger Weise die Signale G2 und R2 zwischen der Funktionseinheit im zusätzlichen Steckplatz 12 und dem Arbiter 15 und die Signale R0 und G0 in analoger Weise wie zuvor bezüglich der Funktionseinheit im Steckplatz 13 erläutert ausgegeben und empfangen, damit die Funktionseinheit im zusätzlichen Steckplatz 12 den Zugriff auf den Bus erhält. Auch eine optionale Funktionseinheit im zusätzlichen Steckplatz 11 kann nur dann auf den Bus 1 zugreifen, wenn ihr nach Durchlaufen der zuvor erläuterten Sequenz nach Ausgabe des Requestsignals R3 das Grantsignal G3 vom Arbiter 15 aus zugeführt wird.

Sind nun mehrere zusätzliche Bussteckplätze 11 bis 13 mit Funktionseinheiten belegt, die auf den Bus 1 des Systemboards 6 zugreifen wollen, also entsprechende Requestsignale R1 bis R3 ausgeben, teilt der Arbiter die Zugriffsberechtigung den einzelnen Funktionseinheiten der zusätzlichen Steckplätze 11 bis 13 kollisionsfrei zu. Um Kollisionen bei der Arbitrierung zu vermeiden, kann der Arbiter 15 den einzelnen zusätzlichen Steckplätzen 11 bis 13 unterschiedliche Prioritäten zuweisen und den Buszugriff dann nach den zugewiesenen Prioritäten gewähren.

Ein alternatives Arbitrierungsverfahren, das auch in Alternative auf dem Arbiter 15 eingerichtet sein kann, ist die Zugriffsgewährung nach umlaufender Priorität (Round-Robin), wobei alle zusätzlichen Bussteckplätze 11 bis 13 die gleiche Priorität haben, diese Priorität jedoch zyklisch an die zusätzlichen Steckplätze vergeben wird. Eine weitere Alternative ist das First-Come-First-Server-Verfahren, bei dem der zusätzliche Bussteckplatz, der zeitlich gesehen als erster ein Requestsignal an den Arbiter sendet, den Buszugriff vom Arbiter zugewiesen erhält. Der Arbiter kann beispielsweise ein Prozessor mit ROM und RAM, also ein softwaregesteuerter Mikrocomputer sein, der die Arbitrierungssignale Grant und Request sendet beziehungsweise empfängt.

In der Figur 3 ist zur Erläuterung des erfindungsgemäßen Systems das Systemboard 6, beispielsweise ein ATX-Board, gezeigt, bei dem der Bus-Steckplatz 4 mit der Erweiterungsplatte 17, der Riser-Card, versehen ist, wobei diese Erweiterungsplatte 17 die zuvor erläuterte Steuereinrichtung 14 und die zusätzlichen Bussteckplätze 11 bis 13 beziehungsweise Slots aufweist. Im Slot 12 ist eine Erweiterungskarte 30 beziehungsweise Funktionseinheit eingesteckt.

## Patentansprüche

1. Vorrichtung zur Erweiterung eines Bussteckplatzes (4) an einem Bus (1) mit Steuerleitungen, Datenleitungen, Adressleitungen und Versorgungsleitungen auf einem Systemboard (6), insbesondere einem Motherboard eines Computers, wobei die Vorrichtung eine Erweiterungsplatte (17) hat, die in den Bussteckplatz (4) des Systemboards (6) einsteckbar ist und die Erweiterungsplatte (17) einen Erweiterungsbus (10) aufweist, dessen Steuerleitungen, Datenleitungen und Adressleitungen den Leitungen des Busses (1) auf dem Systemboard (6) entsprechen, und die Erweiterungsplatte (17) des weiteren mehrere zusätzliche Bussteckplätze (11, 12, 13) sowie eine Steuereinrichtung (14) aufweist, wobei die zusätzlichen Bussteckplätze (11, 12, 13) mit Daten- und Adressleitungen des Erweiterungsbusses (10) verbunden sind und die Steuereinrichtung (14) mit Steuerleitungen des Erweiterungsbusses (10) und über Leitungen mit Steckplatzanschlüssen der zusätzlichen Bussteckplätze (11, 12, 13) verbunden ist und Steuersignale über Steuerleitungen des Erweiterungsbusses (10) sendet oder empfängt,
**dadurch gekennzeichnet, dass**
der Erweiterungsbus (10) Leitungen zur Versorgung aller Komponenten auf der Erweiterungsplatte (17) aufweist, die den Versorgungsleitungen des Busses (1) auf dem Systemboard (6) entsprechen, und die Steuereinrichtung (14) zusätzlich ein Taktsignal (REF) von einer Steuerleitung (36) des Erweiterungsbusses (10) empfängt, das dem Taktsignal des Busses (1) auf dem Systemboard (6) entspricht, und jedem zusätzlichen Bussteckplatz (11, 12, 13) auf der Erweiterungsplatte (17) derart aufbereitete Steuer- und Taktsignale (G1, R1; G2, R2; G3, R3; CLK1, CLK2, CLK3) zuweist, dass jedem zusätzlichen Bussteckplatz (11, 12, 13) ein konfliktfreier Zugriff auf den Bus (1) des Sytemboards (6) über den Bussteckplatz (4) auf dem Systemboard (6) ermöglicht wird.

2. Vorrichtung nach Anspruch 1,
**dadurch gekennzeichnet, dass**
die Steuereinrichtung (14) eine Takterzeugungsschaltung hat, die über einen Eingangsanschluß der Steuereinrichtung (14) ein Taktsignal (REF) erhält, das dem Taktsignal des Busses (1) auf dem Systemboard entspricht, und die aus dem Taktsignal (REF) mehrere zusätzliche Taktsignale (CLK1, CLK2, CLK3) erzeugt, die zueinander phasengleich sind und jeweils einem zugeordneten Steckplatzanschluss eines der zusätzlichen Bussteckplätze (11, 12, 13) zugeführt werden.

3. Vorrichtung nach Anspruch 2,
**dadurch gekennzeichnet, dass**
die von der Takterzeugungsschaltung erzeugten Taktsignale (CLK1, CLK2, CLK3) phasengleich zu dem der Takterzeugungsschaltung zugeführten Taktsignal (REF) sind.

4. Vorrichtung nach Anspruch 3,
**dadurch gekennzeichnet, dass**
die Takterzeugungsschaltung als Pufferschaltung (16) ohne Verzögerung (Zero Delay Buffer) ausgelegt ist.

5. Vorrichtung nach Anspruch 4,
**dadurch gekennzeichnet, dass**
die Pufferschaltung (16) eine Phase-Locked-Loop-Schaltung (45) aufweist, der eingangsseitig das Taktsignal (REF) vom Bus (1) auf dem Systemboard (6) und ein Rückkoppelsignal zugeführt wird, das einem der ausgangsseitig bereitgestellten Taktsignale (CLK1) entspricht, wobei die Phase-Locked-Loop-Schaltung (45) das ausgangsseitige Taktsignal (CLK1) derart erzeugt, dass die Phasendifferenz zwischen eingangsseitig zugeführtem Taktsignal (REF) und Rückkoppelsignal Null wird.

6. Vorrichtung nach einem der Ansprüche 1 bis 5,
**dadurch gekennzeichnet, dass**
die Steuereinrichtung (14) mit Steuerleitungen (34, 35) zum Übertragen von Arbitrierungssignalen (R0, G0) zwischen der Steuereinrichtung (14) und dem Erweiterungsbus (10) verbunden ist und dass die Steuereinrichtung (14) mit Leitungen (39 bis 44) zum Übertragen von Arbitrierungssignalen (G1, R1; G2, R2; G3, R3) zwischen der Steuereinrichtung (14) und zugeordneten Anschlüssen der zusätzlichen Bussteckplätze (11, 12, 13) verbunden ist.

7. Vorrichtung nach Anspruch 6,
**dadurch gekennzeichnet, dass**
zwischen der Steuereinrichtung (14) und dem Erweiterungsbus (10) ein Paar von Arbitrierungssignalen (G0, R0) über ein Paar von zugeordneten Leitungen ausgetauscht wird und dass zwischen der Steuereinrichtung (14) und jedem der zusätzlichen Bussteckplätze (11, 12, 13) je ein Paar von Arbitrierungssignalen (G1, R1; G2, R2; G3, R3) auf einem jeweils zugeordneten Paar von Leitungen (39 bis 44) ausgetauscht wird.

8. Vorrichtung nach Anspruch 7,
**dadurch gekennzeichnet, dass**
die Steuereinrichtung (14) einen Arbiter (15) aufweist, der die Zugriffsberechtigung belegter zusätzlicher Bussteckplätze (11, 12, 13) der Erweiterungsplatte (17) auf den Bus (1) des Systemboards (6) steuert.

9. Vorrichtung nach Anspruch 8,
**dadurch gekennzeichnet, dass**
das Paar von Arbitrierungssignalen (R0, G0) zwischen dem Arbiter (15) der Erweiterungsplatte (17) und dem Systemboard (6) ein Grant-Signal (G0) zur Gewährung des Zugriffs auf den Bus (1) des Sytemboards (6) und ein Request-Signal (R0) zur Nachfrage nach der Gewährung des Zugriffs auf den Bus (1) des Systemboards (6) vom Arbiter (15) aus umfasst.

10. Vorrichtung nach Anspruch 9,
**dadurch gekennzeichnet, dass**
jedes Paar von Arbitrierungssignalen (G1, R1; G2, R2; G3, R3) zwischen dem Arbiter (15) und dem jeweils einen, zugeordneten zusätzlichen Bussteckplatz (11, 12, 13) auf der Erweiterungsplatte (17) ein Grant-Signal (G1, G2, G3) zur Gewährung des Zugriffs auf den Bus (1) des Sytemboards (6) vom Arbiter (15) der Erweiterungsplatte (17) und ein Request-Signal (R1, R2, R3) zur Nachfrage nach der Gewährung des Zugriffs auf den Bus (1) des Sytemboards (6) von dem jeweiligen zusätzlichen Bussteckplatz (11, 12, 13) der Erweiterungsplatte (17) aus umfasst.

11. System mit einem Systemboard (6), aufweisend einen Bus (1) und mehrere an dem Bus (1) angeordnete Steckplätze (2, 3, 4, 5) für Erweiterungskarten,
**dadurch gekennzeichnet, dass**
mindestens eine Vorrichtung gemäß einem der Ansprüche 1 bis 10, aufweisend mehrere zusätzliche Bussteckplätze (11, 12, 13) zur Aufnahme jeweils einer Erweiterungskarte, in einen Bussteckplatz (4) des Systemboards (6) eingesteckt ist.

## Claims

1. Apparatus for expanding a bus slot (4) on a bus (1) having control lines, data lines, address lines and power supply lines on a system board (6), particularly a motherboard in a computer, wherein the apparatus has an expansion plate (17) which can be inserted into the bus slot (4) on the system board (6), and the expansion plate (17) has an expansion bus (10), the control lines, data lines and address lines of which correspond to the lines of the bus (1) on the system board (6), and the expansion plate (17) also has a plurality of additional bus slots (11, 12, 13) and a control device (14), wherein the additional bus slots (11, 12, 13) are connected to data and address lines of the expansion bus (10) and the control device (14) is connected to the control lines of the expansion bus (10) and via lines to slot connections of the additional bus slots (11, 12, 13) and sends or receives control signals via control lines of the expansion bus (10),
**characterized in that**
the expansion bus (10) has lines for supplying power to all components on the expansion plate (17) which correspond to the power supply lines of the bus (1) on the system board (6), and the control device (14) additionally receives a clock signal (REF) from a control line (36) of the expansion bus (10), which clock signal corresponds to the clock signal of the bus (1) on the system board (6), and assigns each additional bus slot (11, 12, 13) on the expansion plate (17) control and clock signals (G1, R1; G2, R2; G3, R3; CLK1, CLK2, CLK3) conditioned such that each additional bus slot (11, 12, 13) is permitted conflict-free access to the bus (1) of the system board (6) via the bus slot (4) on the system board (6).

2. Apparatus according to Claim 1,
**characterized in that**
the control device (14) has a clock generation circuit which receives, via an input connection of the control device (14), a clock signal (REF), corresponding to the clock signal of the bus (1) on the system board, and which takes the clock signal (REF) and generates a plurality of additional clock signals (CLK1, CLK2, CLK3) which are in phase with one another and are respectively supplied to an associated slot connection of one of the additional bus slots (11, 12, 13).

3. Apparatus according to Claim 2,
**characterized in that**
the clock signals (CLK1, CLK2, CLK3) generated by the clock generation circuit are in phase with the clock signal (REF) supplied to the clock generation circuit.

4. Apparatus according to Claim 3,
**characterized in that**
the clock generation circuit is in the form of a zero delay buffer circuit (16) (zero delay buffer).

5. Apparatus according to Claim 4,
**characterized in that**
the buffer circuit (16) has a phase-locked-loop circuit (45) whose input is supplied with the clock signal (REF) from the bus (1) on the system board (6) and with a feedback signal which corresponds to one of the clock signals (CLK1) provided at the output, wherein the phase-locked-loop circuit (45) generates the clock signal (CLK1) at the output such that the phase difference between the clock signal (REF) supplied at the input and the feedback signal becomes zero.

6. Apparatus according to one of Claims 1 to 5,
**characterized in that**
the control device (14) is connected to control lines (34, 35) for transmitting arbitration signals (R0, G0) between the control device (14) and the expansion bus (10) and **in that** the control device (14) is connected to lines (39 to 44) for transmitting arbitration signals (G1, R1; G2, R2; G3, R3) between the control device (14) and associated connections of the additional bus slots (11, 12, 13).

7. Apparatus according to Claim 6,
**characterized in that**
the control device (14) and the expansion bus (10) have a pair of arbitration signals (G0, R0) interchanged between them via a pair of associated lines and **in that** the control device (14) and each of the additional bus slots (11, 12, 13) have a respective pair of arbitration signals (G1, R1; G2, R2; G3, R3) interchanged between them on a respective associated pair of lines (39 to 44).

8. Apparatus according to Claim 7,
**characterized in that**
the control device (14) has an arbiter (15) which controls the access authorization for used additional bus slots (11, 12, 13) of the expansion plate (17) to the bus (1) of the system board (6).

9. Apparatus according to Claim 8,
**characterized in that**
the pair of arbitration signals (R0, G0) between the arbiter (15) of the expansion plate (17) and the system board (6) comprises a grant signal (G0) for granting the access to the bus (1) of the system board (6) and a request signal (R0) for requesting that access to the bus (1) of the system board (6) be granted from the arbiter (15).

10. Apparatus according to Claim 9,
**characterized in that**
each pair of arbitration signals (G1, R1; G2, R2; G3, R3) between the arbiter (15) and the respective one, associated additional bus slot (11, 12, 13) on the expansion plate (17) comprises a grant signal (G1, G2, G3) for the arbiter (15) of the expansion plate (17) to grant the access to the bus (1) of the system board (6) and a request signal (R1, R2, R3) for requesting that the access to the bus (1) of the system board (6) be granted from the respective additional bus slot (11, 12, 13) of the expansion plate (17).

11. System with a system board (6), having a bus (1) and a plurality of slots (2, 3, 4, 5), arranged on the bus (1), for expansion cards,
**characterized in that**
at least one apparatus according to one of Claims 1 to 10, having a plurality of additional bus slots (11, 12, 13) for holding a respective expansion card, is inserted into a bus slot (4) of the system board (6).

## Revendications

1. Dispositif d'extension d'un connecteur de bus (4) sur un bus (1) avec des lignes de commande, des lignes de données, des lignes d'adresses et des lignes d'alimentation sur une carte système (6), notamment d'une carte mère d'un ordinateur, dans lequel le dispositif possède une carte d'extension (17) pouvant s'enficher dans le connecteur de bus (4) de la carte système (6) et la carte d'extension (17) comportant un bus d'extension (10), dont les lignes de commande, les lignes de données et les lignes d'adresses correspondent aux lignes du bus (1) sur la carte système (6), et la carte d'extension (17) comportant en outre plusieurs connecteurs de bus supplémentaires (11, 12, 13) ainsi qu'un équipement de commande (14), dans lequel les connecteurs de bus supplémentaires (11, 12, 13) sont reliés à des lignes de données et d'adresses du bus d'extension (10) et l'équipement de commande (14) étant relié à des lignes de commande du bus d'extension (10) et à des connexions de connecteurs des connecteurs de bus supplémentaires (11, 12, 13) par l'intermédiaire de lignes et émettant ou recevant des signaux de commande par l'intermédiaire de lignes de commande du bus d'extension (10),
**caractérisé en ce que** le bus d'extension (10) comporte des lignes d'alimentation de tous les composants de la carte d'extension (17) qui correspondent aux lignes d'alimentation du bus (1) sur la carte système (6), et l'équipement de commande (14) recevant de plus un signal d'horloge (REF) d'une ligne de commande (36) du bus d'extension (10) qui correspond au signal d'horloge du bus (1) sur la carte système (6), et qui adresse à chaque connecteur de bus supplémentaire (11, 12, 13) sur la carte d'extension (17), des signaux de commande et d'horloge (G1, R1 ; G2, R2 ; G3, R3 ; CLK1, CLK2, CLK3) élaborés de manière à permettre à chaque connecteur de bus supplémentaire (11, 12, 13) d'accéder sans conflits au bus (1) de la carte système (6) par l'intermédiaire du connecteur de bus (4) sur la carte système (6).

2. Dispositif selon la revendication 1,
**caractérisé en ce que** l'équipement de commande (14) a un circuit générateur d'horloge recevant par l'intermédiaire d'une connexion d'entrée de l'équipement de commande (14), un signal d'horloge (REF) correspondant au signal d'horloge du bus (1) sur la carte système et qui à partir du signal d'horloge (REF), génère plusieurs signaux d'horloge supplémentaires (CLK1, CLK2, CLK3) mutuellement en phase et qui sont respectivement acheminés à une connexion correspondante du connecteur d'un des connecteurs de bus supplémentaires (11, 12, 13).

3. Dispositif selon la revendication 2,
**caractérisé en ce que** les signaux d'horloge (CLK1, CLK2, CLK3) générés par le circuit générateur d'horloge sont en phase avec le signal d'horloge (REF) acheminé au circuit générateur d'horloge.

4. Dispositif selon la revendication 3,
**caractérisé en ce que** le circuit générateur d'horloge est réalisé sous la forme d'un circuit buffer (16) sans retard (Zero Delay Buffer).

5. Dispositif selon la revendication 4,
**caractérisé en ce que** le circuit buffer (16) comporte un circuit Phase-Locked-Loop (boucle à verrouillage de phase) (45) qui reçoit du côté de l'entrée, le signal d'horloge (REF) du bus (1) sur la carte système (6) et un signal de contre-réaction correspondant à un des signaux d'horloge (CLK1) disponible du côté de la sortie, le Phase-Locked-Loop (45) générant le signal d'horloge (CLK1) du côté de la sortie de telle sorte que le déphasage devienne nul entre le signal d'horloge (REF) acheminé à l'entrée et le signal de contre-réaction.

6. Dispositif selon une des revendications 1 à 5,
**caractérisé en ce que** l'équipement de commande (14) est relié par des lignes de commande (34, 35) pour la transmission de signaux d'arbitrage (R0, G0) entre l'équipement de commande (14) et le bus d'extension (10) et **en ce que** l'équipement de commande (14) est relié par des lignes (39 à 44) pour la transmission de signaux d'arbitrage (G1, R1 ; G2, R2 ; G3, R3) entre l'équipement de commande (14) et les connexions correspondantes des connecteurs de bus supplémentaires (11, 12, 13).

7. Dispositif selon la revendication 6,
**caractérisé en ce qu'**entre l'équipement de commande (14) et le bus d'extension (10), on permute une paire de signaux d'arbitrage (G0, R0) sur une paire de lignes correspondantes et **en ce qu'**entre l'équipement de commande (14) et chacun des connecteurs de bus supplémentaires (11, 12, 13), on permute respectivement une paire de signaux d'arbitrage (G1, R1 ; G2, R2 ; G3, R3) sur une paire de lignes correspondantes (39 à 44).

8. Dispositif selon la revendication 7,
**caractérisé en ce que** l'équipement de commande (14) comporte un arbitre (15) qui commande l'autorisation d'accès des connecteurs de bus supplémentaires (11, 12, 13) équipés de la carte d'extension (17) sur le bus (1) de la carte système (6).

9. Dispositif selon la revendication 8,
**caractérisé en ce que** la paire de signaux d'arbitrage (R0, G0) entre l'arbitre (15) de la carte d'extension (17) et la carte système (6) englobe un signal de Grant (G0) pour l'octroi de l'accès au bus (1) de la carte système (6) et un signal de Request (R0) pour demander l'octroi de l'accès au bus (1) de la carte système (6) par l'arbitre (15).

10. Dispositif selon la revendication 9,
**caractérisé en ce que** chaque paire de signaux d'arbitrage (G1, R1 ; G2, R2 ; G3, R3) entre l'arbitre (15) et le connecteur de bus supplémentaire (11, 12, 13) respectif correspondant sur la carte d'extension (17) englobe un signal de Grant (G1, G2, G3) pour l'octroi de l'accès au bus (1) de la carte système (6) par l'arbitre (15) de la carte d'extension (17) et un signal de Request (R1, R2, R3) pour demander l'octroi de l'accès au bus (1) de la carte système (6) par le connecteur de bus supplémentaires (11, 12, 13) respectif de la carte d'extension (17).

11. Système avec une carte système (6), comportant un bus (1) et plusieurs connecteurs (2, 3, 4, 5) disposés sur le bus (1) pour des cartes d'extension,
**caractérisé en ce qu'**au moins un dispositif selon une des revendications 1 à 10, comportant plusieurs connecteurs de bus supplémentaires (11, 12, 13) pour recevoir respectivement une carte d'extension, est enfiché dans un connecteur de bus (4) de la carte système (6).
